# EUROPÄISCHE PATENTSCHRIFT

(11) **EP 3 077 202 B1**
(45) Veröffentlichungstag und Bekanntmachung des Hinweises auf die Patenterteilung: **25.07.2018**
(21) Anmeldenummer: 14805897.7
(22) Anmeldetag: 01.12.2014
(51) Int. Cl.: B32B 27/08, B32B 27/36, B32B 27/38, B60R 19/03, B60R 19/22, B62D 25/00

(54) **TRAGENDES, FLÄCHIGES FORMTEIL AUS EINEM MEHRSCHICHTFASERVERBUNDWERKSTOFF, INSBESONDERE FÜR EINE FAHRZEUGKAROSSERIE**
SUPPORTING, FLAT MOLDED PART MADE OF A MULTI-LAYER, COMPOSITE FIBER MATERIAL, IN PARTICULAR FOR A VEHICLE BODY
PIÈCE PRÉFORMÉE PLANE PORTEUSE EN MATÉRIAU COMPOSITE RENFORCÉ PAR DES FIBRES ET STRATIFIÉ, DESTINÉE NOTAMMENT À UNE CARROSSERIE DE VÉHICULE

(30) Priorität: 04.12.2013 DE 102013224927
(43) Veröffentlichungstag der Anmeldung: 12.10.2016
(73) Patentinhaber: Bayerische Motoren Werke Aktiengesellschaft, 80809 München (DE)
(72) Erfinder: BÖGLE, Christian, 81479 München (DE); FODOR, Balazs, 85570 Markt Schwaben (DE)
(86) Internationale Anmeldenummer: PCT/EP2014/076099
(87) Internationale Veröffentlichungsnummer: WO 2015/082398

(56) Entgegenhaltungen:
- EP-A1- 2 030 753
- DE-A1- 3 934 555
- DE-A1-102012 203 727
- DE-U1- 8 607 213
- FR-A1- 2 732 300
- DATABASE WPI Week 198911 Thomson Scientific, London, GB; AN 1989-080533 XP002737742, & JP H01 31835 A (KURARAY CO LTD) 2. Februar 1989 (1989-02-02)

## Beschreibung

Die vorliegende Erfindung bezieht sich auf ein tragendes, flächiges Formteil aus einem Mehrschichtfaserverbundwerkstoff, insbesondere für eine Fahrzeugkarosserie, und eine Fahrzeugkarosserie mit einem derartigen Formteil.

Die Offenlegungsschrift DE 102012203727 A1 zeigt beispielsweise ein Wandelement, das aus einem faserverstärktem Kunststoff hergestellt ist. Ein derartiges Wandelement kann als Stirnwand in einer Kraftfahrzeugkarosserie eingesetzt sein, wobei die Stirnwand zwischen A-Säulen quer zu einer Fahrzeughauptfahrrichtung verläuft und einen Vorderwagenbereich von einem Hinterwagenbereich bzw. einen Motorraum von einem Fahrgastraum trennt. Eine derartige Stirnwand aus faserverstärktem Kunststoff hat den Vorteil, dass sie leicht ist, eine verhältnismäßig große Festigkeit aufweist und die Karosserie hinreichend gut versteift.

Faserverstärkte Kunststoffe, insbesondere mit Kohlenstofffaser verstärkte Kunststoffe, haben jedoch die Eigenschaft, dass sie eine verhältnismäßig geringe Verformbarkeit aufweisen, und bereits nach einem geringen Verformungsweg spröde versagen.

Darüber hinaus ist es bekannt, in Kraftfahrzeugkarosserien aus Stahl oder Aluminium eine entsprechende metallische Stirnwand zwischen Vorderwagen und Fahrgastzelle einzusetzen. Eine derartige metallische Stirnwand ist gegenüber einem faserverstärkten Kunststoff bei gleicher Festigkeit wesentlich schwerer. Die metallische Stirnwand kann im Kollisionsfall über einen verhältnismäßig großen Weg plastisch verformt werden, bevor ein Reißen, d.h. ein endgültiges Versagen, der Stirnwand auftritt.

Die Offenlegungsschrift DE 39 34 555 A1 beschreibt ein faserverstärktes Sandwichlaminat für Strukturbauteile, insbesondere Karosserieteile von Kraftfahrzeugen. Es ist die Aufgabe der vorliegenden Erfindung, ein tragendes, flächiges Formteil bestehend aus einem Mehrschichtfaserverbundwerkstoff zu schaffen, das eine vergrößerte Verformbarkeit, insbesondere bei einer Biegebeanspruchung, aufweist.

Diese Aufgabe wird durch ein tragendes, flächiges Formteil gelöst, das die Merkmale von Patentanspruch 1 aufweist. Ferner wird diese Aufgabe durch eine Karosserie gelöst, die die Merkmale von Patentanspruch 11 aufweist. Vorteilhafte Weiterbildungen sind in den abhängigen Patentansprüchen aufgeführt.

Insbesondere besteht ein tragendes, flächiges Formteil gemäß der vorliegenden Erfindung aus einem Mehrschichtfaserverbundwerkstoff. Beispielsweise ist das Formteil für eine Fahrzeugkarosserie als Bestandteil einer Crashstruktur des Fahrzeugs geeignet. Das Formteil weist zumindest eine erste Tragschicht und eine zweite Tragschicht auf, zwischen welchen angrenzend eine Verbindungsschicht angeordnet ist, die derart ausgebildet ist, dass bei einer Biegebeanspruchung des Formteils eine Schichttrennung zwischen der ersten Tragschicht und der zweiten Tragschicht erfolgt. Dabei weisen die Verbindungsschicht und die Tragschicht ein gemeinsames Matrixsystem auf. Die Mehrschichtigkeit bezieht sich also auf die mehreren Faserschichten, die in einem gemeinsamen Matrixsystem bzw. einer gemeinsamen Matrix eingebettet sind. Die Matrix ist dabei ein Werkstoff, insbesondere ein Kunststoff, in dem die Fasern eingebettet sind.

Die genannte Schichttrennung erfolgt bevorzugt bei einer zuvor eingestellten Schwelllast bzw. Schwellbeanspruchung. Die Schichtrennung führt zu einer Verringerung der Biegesteifigkeit des flächigen Formteils, wobei gleichzeitig eine Membransteifigkeit des Formteils bestehen bleibt. Mit anderen Worten verhält sich das flächige Bauteil wie eine Membran, die innerhalb bestimmter Grenzen verformbar ist, jedoch nicht reißt. Das Formteil kann also Biegemomente bei einer größeren Verformbarkeit des Formteils aufnehmen. Das Formteil versagt damit verglichen mit dem Fall, in dem zwischen der ersten Tragschicht und der zweiten Tragschicht keine Schichttrennung erfolgen würde, erst nach einer größeren Verformung spröde. Bei dem Formteil eine Faser-Matrixhaftung in der Verbindungsschicht geringer als eine Faser-Matrixhaftung in den Tragschichten ausgebildet.

Hierdurch versagt eine Faser-Matrixverbindung in der Verbindungsschicht früher als in der Tragschicht. Dadurch können sich die erste Tragschicht und die zweite Tragschicht relativ zueinander, insbesondere in der Ebene der Schichten, bewegen. Dies bedeutet, dass das Formteil insgesamt stärker gebogen werden kann, bis es vollständig spröde versagt.

Insbesondere ist eine Querzugfestigkeit der Verbindungsschicht geringer als eine Querzugfestigkeit der Tragschicht. Die Querzugfestigkeit ist eine Festigkeit der Schicht quer zu einer Hauptfaserrichtung. Die Hauptfaserrichtung ist die Richtung, entlang der die Fasern zumindest überwiegend orientiert sind.

Bevorzugt ist das Formteil ein dünnwandiges Formteil, so dass es zum Einen leichter ist und zum Anderen eine Verformbarkeit durch Biegung verbessert ist.

Mit Verformbarkeit ist hier insbesondere eine elastische Verformbarkeit der Tragschichten gemeint. In der Verbindungsschicht tritt jedoch durch die Schichttrennung eher eine plastische Verformung bzw. ein plastisches Versagen ein.

Gemäß einer weiteren bevorzugten Ausführungsform der vorliegenden Erfindung bestehen die Fasern der Verbindungsschicht aus einem anderen Material als die Fasern der Tragschichten.

Hierdurch ist es möglich mit einfachen Mitteln eine unterschiedliche Fasermatrixhaftung zwischen Verbindungsschicht und Tragschichten herzustellen. Hierbei kommt es insbesondere auf die Materialpaarung Matrixsystem und Faser an.

Gemäß einer weiteren bevorzugten Weiterbildung sind die Fasern der Verbindungsschicht derart oberflächenbehandelt, dass eine Fasermatrixhaftung zwischen den Fasern und der Matrix gegenüber nicht oberflächenbehandelten Fasern und der Matrix verringert ist. Eine derartige Oberflächenbehandlung kann sowohl bei einer Ausführungsform mit gleichen Faserwerkstoffen in den Tragschichten und der Verbindungsschicht als auch bei unterschiedlichen Faserwerkstoffen in den Tragschichten und der Verbindungsschicht durchgeführt sein.

Hierdurch kann besonders einfach die Schichttrennung zwischen der ersten Tragschicht und der zweiten Tragschicht mit den bereits vorstehend erläuterten Vorteilen erfolgen.

Alternativ oder zusätzlich können die Fasern der Tragschichten derart oberflächenbehandelt sein, so dass eine Haftung zwischen den Fasern und der Matrix gegenüber nicht oberflächenbehandelten Fasern und der Matrix erhöht ist.

Bevorzugt sind die Fasern der Verbindungsschicht zur Verringerung der Fasermatrixhaftung beschichtet. Zusätzlich oder alternativ können die Fasern der Tragschichten zur Erhöhung der Fasermatrixhaftung beschichtet sein.

Damit kann eine Beschichtung von Fasern der Verbindungsschicht und/oder der Tragschichten einen Unterschied in der Fasermatrixhaftung zwischen der Verbindungsschicht und den Tragschichten herbeiführen und hinreichend groß machen.

Bevorzugt ist das Matrixsystem des Mehrschichtfaserverbundwerkstoffes ein polymeres Matrixsystem, d.h. ein Kunststoff. Das Matrixsystem kann ein duromeres Matrixsystem oder ein thermoplastisches Matrixsystem sein. Bevorzugt ist im Falle des duromeren Matrixsystems ein Epoxid. Ferner ist im Fall eines thermoplastischen Matrixsystems ein Polyurethan oder ein Polyester besonders bevorzugt.

Hinsichtlich der Fasern sind in Bezug auf die Verbindungsschichten bevorzugt, überwiegend oder ausschließlich Polyesterfasern verwendet. Alternativ oder zusätzlich sind überwiegend oder ausschließlich Polyethylenfasern verwendet. Zusätzlich oder alternativ können die Tragschichten überwiegend oder ausschließlich Kohlenstofffasern enthalten. Alternativ oder zusätzlich können die Tragschichten überwiegend oder ausschließlich Aramidfasern enthalten. Ferner können die Tragschichten überwiegend oder ausschließlich Glasfasern enthalten.

Eine besonders bevorzugte Materialpaarung ist ein Epoxid als Matrixsystem und Polyesterfasern in der Verbindungsschicht sowie Kohlenstofffasern in den Tragschichten.

Bevorzugt liegen in den Formteilen die Fasern in dem Mehrschichtverbundwerkstoff im Wesentlichen parallel zur flächigen Erstreckung des Bauteils vor.

Bevorzugt sind die Fasern des Mehrschichtverbundwerkstoffs im Wesentlichen Endlosfasern.

Ferner sind die Fasern bevorzugt in jeder Schicht im Wesentlichen unidirektional angeordnet, wobei die Fasern unterschiedlicher Schichten durchaus in unterschiedlichen Richtungen ausgerichtet sein können.

Besonders bevorzugt ist das Formteil in Dickenrichtung symmetrisch aufgebaut. Damit ist die Verbindungsschicht im Bezug auf die Dickenrichtung in der Mitte des Bauteils angeordnet. Diese Ausführung ermöglicht eine größtmögliche Verformbarkeit des Formteils durch die Biegebeanspruchung.

Gemäß einer Weiterbildung kann das Formteil weitere Tragschichten aufweisen. Insbesondere kann angrenzend zu der ersten Tragschicht eine weitere Tragschicht angeordnet sein. Ferner kann angrenzend zu der zweiten Tragschicht eine weitere Tragschicht angeordnet sein. Angrenzend zu den weiteren Tragschichten können wiederum ebenso weitere Tragschichten angeordnet sein. Im Falle, dass es mehr als zwei Tragschichten gibt, können auch weitere Verbindungsschichten angeordnet sein, wobei eine Verbindungsschicht immer zumindest zwischen zwei Tragschichten angeordnet ist.

Bevorzugt ist das Formteil eine Wand zum Einbau in eine Fahrzeugkarosserie. Die Wand kann beispielsweise eine Stirnwand sein, die sich im eingebauten Zustand quer zu einer Fahrzeughauptfahrrichtung erstreckt und zwischen einem Vorderwagen und einer Fahrgastzelle angeordnet ist. Insbesondere kann sich die Wand zwischen einer linken und einer rechten A-Säule erstrecken.

Die Wand ist dabei bevorzugt derart ausgebildet, dass sie sich durch eine Kollisionslast durch eine Frontalkollision des Kraftfahrzeugs in Richtung der Fahrgastzelle durch vorstehend beschriebene Schichttrennung hinreichend in Richtung der Fahrgastzelle verformen kann, ohne dass sie vollständig spröde versagt.

Die vorliegende Erfindung bezieht sich ferner auf eine Kraftfahrzeugkarosserie, die ein erfindungsgemäßes Formteil aufweist.

Vorstehend beschriebene Weiterbildungen der Erfindung können soweit möglich und sinnvoll beliebig miteinander kombiniert werden.

Es folgt eine Kurzbeschreibung der Figuren.
- Fig. 1: ist eine schematische Ansicht eines Schichtaufbaus eines Formteils gemäß einem Ausführungsbeispiel der vorliegenden Erfindung.
- Fig. 2: ist eine schematische Seitenansicht eines Kraftfahrzeugs mit dem Formteil gemäß dem Ausführungsbeispiel der vorliegenden Erfindung zu einem Beginn einer Frontalkollision.
- Fig. 3: ist eine schematische Seitenansicht des Kraftfahrzeugs mit dem Formteil gemäß dem Ausführungsbeispiel der vorliegenden Erfindung im weiteren Verlauf der Frontalkollision zu einem zweiten Zeitpunkt der Frontalkollision.
- Fig. 4: ist eine schematische Seitenansicht des Kraftfahrzeugs mit dem Formteil gemäß dem Ausführungsbeispiel der vorliegenden Erfindung zu einem dritten Zeitpunkt der Frontalkollision, bei dem das Formteil verformt wurde.

Nachstehend ist ein Ausführungsbeispiel der vorliegenden Erfindung unter Bezugnahme auf die Figuren beschrieben.

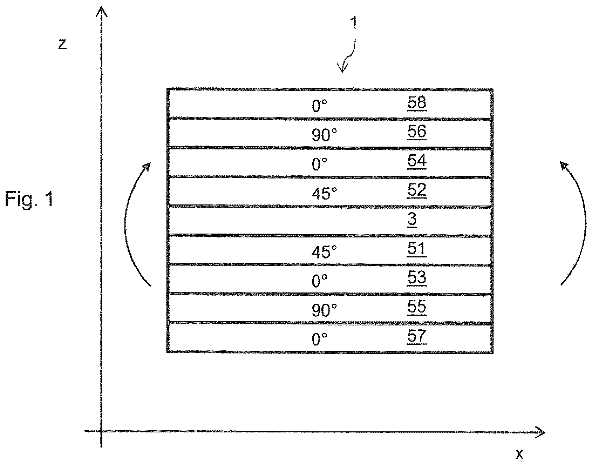

In Figur 1 ist ein prinzipieller Schnitt durch das Formteil 1 in einer x/z-Ebene eines Kraftfahrzeugs gezeigt. Das Formteil 1 ist struktureller Bestandteil einer Karosserie des Kraftfahrzeugs gemäß dem Ausführungsbeispiel der vorliegenden Erfindung. Das Formteil 1 besteht aus einem Mehrschichtfaserverbundwerkstoff. Das Formteil 1 ist ein strukturell tragendes, dünnwandiges, sich über eine große Fläche erstreckendes Karosseriebauteil. Der Mehrschichtaufbau des Formteils 1 ist symmetrisch im Bezug auf eine Mitte des Formteils in Dickenrichtung. In der Mitte des Formteils 1 befindet sich eine Verbindungsschicht 3. Angrenzend an die Verbindungsschicht 3 sind eine erste Tragschicht 51 und eine zweite Tragschicht 52 angeordnet. Fasern der Verbindungsschicht 3 sind unidirektional mit einem Winkel von 0° gegenüber der Fahrzeugquerrichtung, also einer Y-Richtung, ausgebildet. Die Fasern der ersten Tragschicht und der zweiten Tragschicht sind ebenso Endlosfasern, die in einem Winkel von 45° angeordnet sind. An die erste Tragschicht 51 grenzt eine dritte Tragschicht 53 an, deren Faserausrichtung 0° beträgt. An die dritte Tragschicht 53 grenzt eine fünfte Tragschicht 55 an, deren Fasern im 90° Winkel angeordnet sind. Darüber hinaus grenzt an die fünfte Tragschicht eine siebte Tragschicht 57 an, deren Fasern im 0° Winkel angeordnet sind. Analog grenzt an die zweite Tragschicht 52 eine vierte Tragschicht 54 an, deren Fasern im 0° Winkel ausgerichtet sind. An die vierte Tragschicht 54 grenzt ferner eine sechste Tragschicht 56 an, deren Fasern im 90° Winkel ausgebildet sind. Darüber hinaus grenzt an die sechste Tragschicht 56 eine achte Tragschicht 58 an, deren Fasern im 0° Winkel ausgebildet sind. Ebenso wie bei der Verbindungsschicht 3 sind die Fasern der Tragschichten jeweils unidirektional ausgerichtet. Insgesamt sind auf beiden Seiten der Verbindungsschicht 3 Tragschichten in symmetrischer Art und Weise angeordnet.

Das Formteil 1 weist dabei eine gemeinsame polymere Matrix auf. D.h. alle Tragschichten sowie die Verbindungsschicht 3 sind durch dieselbe polymere Matrix gebildet. Die Fasern der Verbindungsschicht 3 sind aus einem derartigen Werkstoff ausgebildet bzw. sind derart oberflächenbehandelt, so dass eine Fasermatrixhaftung der Fasern der Verbindungsschicht mit der polymeren Matrix erheblich geringer ist als eine Fasermatrixhaftung der Fasern der Tragschichten mit der polymeren Matrix.

Beispielsweise besteht die polymere Matrix aus einem Epoxid. Die Fasern der Tragschichten sind beispielsweise Kohlenstofffasern. Die Fasern der Verbindungsschicht 3 sind demgegenüber beispielsweise Polyesterfasern. Eine Fasermatrixhaftung einer Polyesterfaser mit der Epoxidmatrix ist erheblich geringer als eine Fasermatrixhaftung der Kohlenstofffasern mit der Epoxidmatrix. Bei einer geringen Fasermatrixhaftung ist eine Querzugfestigkeit der jeweiligen Schicht ein messbarer Parameter. Die Querzugfestigkeit wird in einem Zugversuch quer zur Faserausrichtung ermittelt.

Wird nun das Formteil 1 auf Biegung beansprucht, so wie in Figur 1 durch Pfeile angedeutet ist, so erfolgt zunächst eine Schichttrennung der ersten Tragschicht 51 von der zweiten Tragschicht 52. Insbesondere versagt eine Haftung der Fasern in der Verbindungsschicht 3, so dass es zu einer Relativbewegung zwischen der ersten Tragschicht 51 und der zweiten Tragschicht 52 kommen kann. Dies führt wiederum dazu, dass bei der Biegebeanspruchung und der damit einhergehenden zunächst elastischen Verformung eine Dehnung der äußersten Tragschichten, hier also der achten Tragschicht 58 und der siebten Tragschicht 57, deutlich geringer als in dem Fall ausfällt, in dem keine Schichttrennung stattfindet.

Insgesamt kann eine mögliche Verformung des Formteils 1 durch Biegung dadurch vergrößert werden, dass die erste Tragschicht 51 und die zweite Tragschicht 52 gegeneinander gleiten können, wenn die Verbindungsschicht 3 versagt.

Das Formteil, das ein Karosseriebauteil einer tragenden Crashstruktur einer Kraftfahrzeugkarosserie ist, kann beispielsweise eine sogenannte vordere Stirnwand 1 sein.

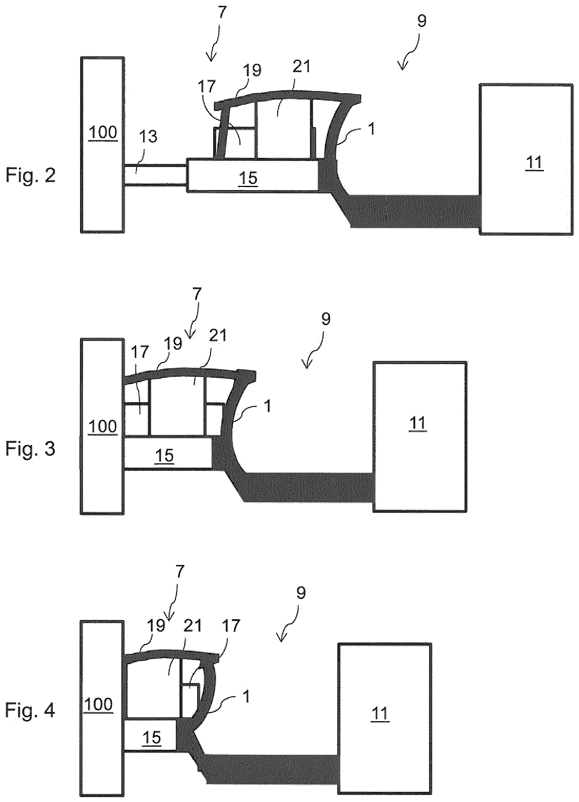

Wie in Figur 2 gezeigt ist, ist eine vordere Stirnwand 1 zwischen einem Vorderwagen 7 und einer Fahrgastzelle 9 angeordnet. In Figur 2 ist eine schematische Seitenansicht eines typischen Personenkraftfahrzeugs mit einem Vorderwagen 7, einer Fahrgastzelle 9 und einem Hinterwagen 11 gezeigt. Die Fahrgastzelle 9 ist zwischen dem Vorderwagen 7 und dem Hinterwagen 11 angeordnet. Der Vorderwagen 7 ist derart ausgestaltet, dass er im Fall einer frontalen Kollision des Kraftfahrzeugs mit einem Kollisionsgegner 100 zum Schutz der Fahrgastzelle 9 hinreichend Kollisionsenergie abbauen kann und einen hinreichenden Deformationsweg zum Abbau dieser Kollisionsenergie zur Verfügung stellt. Die Crashstruktur des Vorderwagens 7 weist beispielsweise wie üblicherweise ein linkes Deformationselement und ein rechtes Deformationselement 13 auf, die auch Crashboxen genannt werden. Das linke Deformationselement 13 ist mit einem linken vorderen Motorträger 15 fluchtend an dessen vorderen Ende verbunden. Ebenso ist das rechte Deformationselement 13 mit einem rechten vorderen Motorträger 15 fluchtend verbunden. An den Motorträgern 15 ist eine Antriebseinheit 17 angebunden. Ferner zählen zur Crashstruktur des Vorderwagens 17 beispielswiese linke und rechte Radhausstützträger 19 sowie linke und rechte Federdome 21. Die Motorträger 15 stützten sich unter anderen an der vorderen Stirnwand 1 ab, die das erfindungsgemäße Formteil bildet. Die vordere Stirnwand 1 trennt den Vorderwagen 7 und die Fahrgastzelle 9 voneinander.

Im Folgenden ist eine Funktion der vorderen Stirnwand 1 des Kraftfahrzeugs gemäß dem Ausführungsbeispiel der vorliegenden Erfindung unter Bezugnahme auf Figuren 2 bis 4 erläutert.

Insbesondere zeigt Figur 2 den Zustand eines Kraftfahrzeugs zu einem ersten Zeitpunkt, nämlich einem Beginn einer Frontalkollision des Kraftfahrzeugs mit dem Kollisionsgegner 100, wobei noch keine Energieabsorption und Verzögerung des Kraftfahrzeugs stattgefunden hat. Es hat noch keinerlei Verformung der Crashstruktur stattgefunden.

In Figur 3 ist ferner ein Zustand des Kraftfahrzeugs bei fortgeschrittener Frontalkollision zu einem zweiten Zeitpunkt gezeigt. Zu dem zweiten Zeitpunkt ist die Crashstruktur des Vorderwagens 7 schon erheblich verformt worden, wobei insbesondere die Deformationselemente 13 und die Motorträger 15 erheblich verformt wurden und dabei zu einem Abbau von Kollisionsenergie beigetragen haben. Ferner liegt zu dem zweiten Zeitpunkt die Antriebseinheit 17 bereits mittelbar oder unmittelbar an dem Kollisionsgegner 100 an und wurde bereits in Richtung der vorderen Stirnwand 1 verschoben, so dass eine Verblockung zwischen Kollisionsgegner 100 und der vorderen Stirnwand 1 eintritt, da die Antriebseinheit 17 im Wesentlichen kein Verformungspotential aufweist. Dies führt dazu, dass über die Antriebseinheit 17 ein Biegemoment auf die Stirnwand aufgegeben wird. Insbesondere drückt die Kollisionslast quer zu der flächigen Erstreckung der Stirnwand 1 gegen die Stirnwand 1.

Sobald eine vorbestimmte Last überschritten ist, findet in der vorderen Stirnwand 1 eine Schichttrennung zwischen der ersten Tragschicht 51 und der zweiten Tragschicht 52 statt, so dass die Stirnwand 1 deutlich stärker verformt werden kann, bevor sie vollständig spröde versagt, als wenn keine Schichttrennung zwischen der ersten Tragschicht 51 und der zweiten Tragschicht 52 stattfinden würde.

In Figur 4 ist das Verformen der Stirnwand 1 über ein Ausbeulen der Stirnwand 1 in Richtung der Fahrgastzelle 9 dargestellt.

Die Stirnwand 1 verhält sich in bestimmten Grenzen also wie eine elastische Membran, wobei sie durch die Schichttrennung an Biegefestigkeit verliert. Es wird hierdurch weiterer Deformationsweg frei, so dass die Crashstruktur durch weitere Verformung weiter Kollisionsenergie abbauen kann.

Insgesamt ist es dadurch möglich, einen kürzeren Vorderwagen vorzusehen, der trotzdem Erfordernisse eines Kollisionslastfalls bei einer Frontalkollision erfüllten kann.

Durch die Schichttrennung wird zwar eine Biegesteifigkeit bzw. ein Biegewiderstand der Stirnwand reduziert, die Zugeigenschaften der Tragschichten, insbesondere der äußersten Tragschichten, bleiben davon aber unberührt.

## Patentansprüche

1. Tragendes, flächiges Formteil (1) bestehend aus einem Mehrschichtfaserverbundwerkstoff, wobei das Formteil (1) zumindest eine erste Tragschicht (51) und eine zweite Tragschicht (52) aufweist, zwischen welchen angrenzend eine Verbindungsschicht (3) angeordnet ist, wobei die Verbindungsschicht (3) und die Tragschichten (51, 52) ein gemeinsames Matrixsystem aufweisen,
**dadurch gekennzeichnet, dass**
die Verbindungsschicht (3) derart ausgebildet ist, dass bei einer Biegebeanspruchung des Formteils (1) eine Schichttrennung zwischen der ersten Tragschicht (51) und der zweiten Tragschicht (52) erfolgt, und wobei eine Fasermatrixhaftung in der Verbindungsschicht (3) geringer als eine Fasermatrixhaftung in den Tragschichten (51, 52) ausgebildet ist, und insbesondere eine Querzugfestigkeit der Verbindungsschicht (3) geringer als eine Querzugfestigkeit der Tragschichten (51, 52) ist.

2. Formteil nach Patentanspruch 1, wobei die Fasern der Verbindungsschicht (3) aus einem anderen Material als die Fasern der Tragschichten (51, 52) bestehen.

3. Formteil nach einem der Patentansprüche 1 oder 2, wobei die Fasern der Verbindungsschicht (3) zur Verringerung der Fasermatrixhaftung oberflächenbehandelt sind oder/und die Fasern der Tragschichten (51, 52) zur Erhöhung der Fasermatrixhaftung oberflächenbehandelt sind.

4. Formteil nach Patentanspruch 3, wobei die Fasern der Verbindungsschicht (3) zur Verringerung der Fasermatrixhaftung beschichtet sind oder/und die Fasern der Tragschichten (51, 52) zur Erhöhung der Fasermatrixhaftung beschichtet sind.

5. Formteil nach einem der Patentansprüche 1 bis 4, wobei der Mehrschichtfaserverbundwerkstoff ein polymeres Matrixsystem, insbesondere ein duromeres Matrixsystem, beispielsweise Epoxid, oder ein thermoplastisches Matrixsystem, beispielsweise Polyurethan oder Polyester, aufweist.

6. Formteil nach einem der Patentansprüche 1 bis 5, wobei die Verbindungsschicht (3) überwiegend oder ausschließlich Polyesterfasern und/oder überwiegend oder ausschließlich Polyethylenfasern enthält und/oder wobei die Tragschichten (51, 52) überwiegend oder ausschließlich Kohlenstoff-Fasern, oder überwiegend oder ausschließlich Aramidfasern, oder überwiegend oder ausschließlich Glasfasern enthalten.

7. Formteil nach einem der Patentansprüche 1 bis 6, wobei die Fasern in dem Mehrschichtverbundwerkstoff im Wesentlichen parallel zur flächigen Erstreckung des Formteils (1) ausgerichtet sind, und/oder wobei die Fasern im Wesentlichen Endlosfasern sind, und/oder wobei die Fasern in jeder Schicht im Wesentlichen unidirektional angeordnet sind.

8. Formteil nach einem der Patentansprüche 1 bis 7, wobei das Formteil (1) in Richtung seiner Dicke symmetrisch aufgebaut ist, und wobei insbesondere die Verbindungsschicht (3) in Richtung seiner Dicke in der Mitte angeordnet ist.

9. Formteil nach einem der Patentansprüche 1 bis 8, wobei das Formteil (1) weitere Tragschichten (53, 54, 55, 56, 57, 58) und/oder weitere Verbindungsschichten aufweist.

10. Formteil nach einem der Patentansprüche 1 bis 9, wobei das Formteil eine Wand (1) zum Einbau in einer Fahrzeugkarosserie ist, die sich in eingebauten Zustand quer zu einer Fahrzeughauptfahrrichtung zwischen einem Vorderwagen (7) und einer Fahrgastzelle (9) erstreckt, und wobei sich die Wand (1) insbesondere zwischen A-Säulen erstreckt.

11. Karosserie für ein Kraftfahrzeug mit einem Formteil nach einem der Patentansprüche 1 bis 10, wobei das Formteil (1) Bestandteil einer Crashstruktur des Kraftfahrzeugs ist und derart ausgelegt ist, dass in einem Kollisionslastfall eine Biegesteifigkeit des Formteils (1) durch die Schichttrennung verringert wird, so dass eine größere Verformung des Formteils möglich ist.

## Claims

1. A supporting, sheet-like shaped part (1) comprising a multi-layer composite fibre material, wherein the shaped part (1) has at least a first supporting layer (51) and a second supporting layer (52), between which a connecting layer (3) is arranged adjacently, wherein the connecting layer (3) and the supporting layers (51, 52) have a common matrix system,
**characterised in that**
the connecting layer (3) is formed such that in the event of a bending stress on the shaped part (1) a layer separation takes place between the first supporting layer (51) and the second supporting layer (52), and wherein a fibre matrix adhesion in the connecting layer (3) is designed to be less than a fibre matrix adhesion in the supporting layers (51, 52), and especially a transverse tensile strength of the connecting layer (3) is less than a transverse tensile strength of the supporting layers (51, 52).

2. A shaped part according to Claim 1, wherein the fibres of the connecting layer (3) comprise of a different material from the fibres of the supporting layers (51, 52).

3. A shaped part according to one of Claims 1 or 2, wherein the fibres of the connecting layer (3) are surface treated in order to reduce the fibre matrix adhesion or/and the fibres of the supporting layers (51, 52) are surface treated in order to increase the fibre matrix adhesion.

4. A shaped part according to Claim 3, wherein the fibres of the connecting layer (3) are coated in order to reduce the fibre matrix adhesion or/and the fibres of the supporting layers (51, 52) are coated in order to increase the fibre matrix adhesion.

5. A shaped part according to one of Claims 1 to 4, wherein the multi-layer composite fibre material has a polymeric matrix system, epecially a thermoset matrix system, for example epoxide, or a thermoplastic matrix system, for example polyurethane or polyester.

6. A shaped part according to one of Claims 1 to 5, wherein the connecting layer (3) contains predominantly or exclusively polyester fibres and/or predominantly or exclusively polyethylene fibres, and/or wherein the supporting layers (51, 52) contain predominantly or exclusively carbon fibres, or predominantly or exclusively aramid fibres, or predominantly or exclusively glass fibres.

7. A shaped part according to one of Claims 1 to 6, wherein the fibres in the multi-layer composite material are oriented substantially parallel to the sheet-like extent of the shaped part (1), and/or wherein the fibres are substantially endless fibres, and/or wherein the fibres in each layer are arranged substantially unidirectionally.

8. A shaped part according to one of Claims 1 to 7, wherein the shaped part (1) is constructed symmetrically in the direction of its thickness, and wherein especially the connecting layer (3) is arranged in the middle in the direction of its thickness.

9. A shaped part according to one of Claims 1 to 8, wherein the shaped part (1) has further supporting layers (53, 54, 55, 56, 57, 58) and/or further connecting layers.

10. A shaped part according to one of Claims 1 to 9, wherein the shaped part is a wall (1) for installing in a vehicle body, which wall in the installed state extends transversely to a main direction of travel of the vehicle between a front end (7) and a passenger cell (9), and wherein the wall (1) extends especially between A-pillars.

11. A vehicle body for a motor vehicle with a shaped part according to one of Claims 1 to 10, wherein the shaped part (1) is a component of a crash structure of the motor vehicle and is designed such that in the event of a collision load a flexural strength of the shaped part (1) is reduced by the layer separation, so that greater deformation of the shaped part is possible.

## Revendications

1. Pièce moulée plane porteuse (1) constituée d'un matériau composite renforcé par des fibres stratifié, la pièce moulée (1) comprenant au moins une première couche support (51) et une seconde couche support (52) entre lesquelles et contigüe à celle-ci est positionnée une couche de liaison molle (3), la couche de liaison (3) et les couches support (51, 52) ayant un système de matrice commun,
**caractérisée en ce que**
la couche de liaison (3) est réalisée de sorte que, lors d'une sollicitation en flexion de la pièce moulée (1), une séparation de couches entre la première couche support (51) et la seconde couche support (52) se produise, et, l'adhérence de la matrice en fibres dans la couche de liaison (3) est inférieure à l'adhérence de la matrice en fibres dans les couches support (51, 52) et en particulier la résistance à la traction transversale de la couche de liaison (3) est inférieure à la résistance à la traction transversale des couches support (51, 52).

2. Pièce moulée conforme à la revendication 1,
dans laquelle les fibres de la couche de liaison (3) sont réalisées en un autre matériau que les fibres des couches-support (51, 52).

3. Pièce moulée conforme à l'une des revendications 1 et 2,
dans laquelle les fibres de la couche de liaison (3) sont traitées en surface pour diminuer l'adhérence de la matrice de fibres et/ou les fibres des couches support (51, 52) sont traitées en surface pour augmenter l'adhérence de la matrice de fibres.

4. Pièce moulée conforme à la revendication 3,
dans laquelle les fibres de la couche de liaison (3) sont revêtues pour diminuer l'adhérence de la matrice de fibres et/ou les fibres des couches support sont revêtues (51, 52) pour augmenter l'adhérence de la matrice de fibres.

5. Pièce moulée conforme à l'une des revendications 1 à 4,
dans laquelle le matériau composite renforcé par des fibres stratifié renferme un système de matrice polymère, en particulier un système de matrice thermodurcissable, par exemple un époxyde ou un système de matrice thermoplastique, par exemple un polyuréthane ou un polyester.

6. Pièce moulée conforme à l'une des revendications 1 à 5,
dans laquelle la couche de liaison (3) renferme principalement ou exclusivement des fibres de polyester et/ou principalement ou exclusivement des fibres de polyéthylène, et/ou les couches support (51, 52) renferment principalement ou exclusivement des fibres de carbone ou principalement ou exclusivement des fibres d'aramide ou principalement ou exclusivement des fibres de verre.

7. Pièce moulée conforme à l'une des revendications 1 à 6,
dans laquelle dans le matériau composite stratifié, les fibres sont essentiellement parallèles au plan de la pièce moulée (1) et/ou les fibres sont essentiellement des fibres sans fin et/ou dans chaque couche les fibres sont orientées de manière essentiellement unidirectionnelle.

8. Pièce moulée conforme à l'une des revendications 1 à 7,
réalisée symétriquement dans la direction de son épaisseur, dans laquelle en particulier la couche de liaison (3) est située dans une position médiane en direction de son épaisseur.

9. Pièce moulée conforme à l'une des revendications 1 à 8,
comportant d'autres couches support (53, 54, 55, 56, 57, 58) et/ou d'autres couches de liaison.

10. Pièce moulée conforme à l'une des revendications 1 à 9,
comportant une paroi (1) destinée à être montée dans la carrosserie d'un véhicule qui, à l'état monté, s'étend transversalement à la direction de déplacement principale du véhicule entre la partie avant (7) et l'habitacle (9) du véhicule, et, la paroi (1) s'étend, en particulier, entre les colonnes A.

11. Carrosserie d'un véhicule comprenant une pièce moulée conforme à l'une des revendications 1 à 10, dans laquelle la pièce moulée (1) est un élément d'une structure anticollision du véhicule et est réalisée de sorte que, dans le cas d'une collision, la rigidité en flexion de la pièce moulée (1) soit diminuée par la séparation de couches pour qu'une plus grande déformation de la pièce moulée soit possible.
